# FASCICULE DE BREVET EUROPEEN

(11) **EP 0 617 674 B1**
(45) Date de publication et mention de la délivrance du brevet: **03.04.1996**
(21) Numéro de dépôt: 93902351.1
(22) Date de dépôt: 18.12.1992
(51) Int. Cl.: B60K 31/04, B60K 26/02, B60K 31/18

(54) **DISPOSITIF D'ASSISTANCE AU CONTROLE DE LA PUISSANCE DES VEHICULES EQUIPES D'UN MOTEUR**
STEUERUNGSHILFSGERÄT FÜR DIE LEISTUNGSKONTROLLE VON FAHRZEUGEN MIT VERBRENNUNGSMOTOR
POWER CONTROL ASSISTANCE DEVICE FOR MOTOR VEHICLES

(30) Priorité: 26.12.1991 FR 9116350
(43) Date de publication de la demande: 05.10.1994
(73) Titulaire: LANDRRETCHE, Alain, F-44100 Nantes (FR)
(72) Inventeur: LANDRRETCHE, Alain, F-44100 Nantes (FR)
(74) Mandataire: Bloch, Gérard
(86) Numéro de dépôt international: FR9201208
(87) Numéro de publication internationale: WO9312949

(56) Documents cités:
- EP-A- 0 174 662
- FR-A- 2 245 184
- FR-A- 2 532 894
- GB-A- 937 629
- GB-A- 1 016 205
- GB-A- 2 114 717
- US-A- 2 822 881

## Description

La présente invention concerne un dispositif d'assistance au contrôle de la puissance d'engins automobiles à moteur. Elle est particulièrement adaptée à la maîtrise de la vitesse et du glissement de traction des véhicules routiers, mais cette application doit être comprise comme un exemple non limitatif de ses utilisations potentielles. Le confort et la puissance des véhicules automobiles routiers, ainsi que les conditions de circulation du monde moderne, rendent problématique le respect des limitations de vitesse. Le conducteur qui veut à la fois maintenir son véhicule à la vitesse limite autorisée et ne pas enfreindre la réglementation est astreint à prêter une grande attention au compteur. Un dispositif capable de l'assister efficacement dans cette tâche présenterait beaucoup d'intérêt. On connait des réalisations antérieures, parmi lesquelles on peut distinguer trois principes.
- Las régulateurs de vitesse: ils maintiennent la vitesse stable malgré les variations du profil de la route. - Les alarmes de survitesse: elles signalent les dépassements de la vitesse limite au moyen d'une alarme lumineuse ou sonore. - Les limiteurs de vitesse: ils s'opposent au dépassement de la vitesse limite, le plus souvent en positionnant une butée mobile sur la commande de puissance. Les appareils selon ces principes sont finalement peu diffusés, à l'exception des régulateurs que les constructeurs proposent en option sur des véhicules haut de gamme. On peut citer comme exemples représentatifs les brevets Français 2 164 362, 2 537 742, 2 444 163, 2 632 578 et le brevet GB,A,2 114 717 (British Aerospace). Ce brevet décrit un dispositif qui crée, au moyen d'un moteur pas à pas particulier, des crans durs et une force résistante analogue à une friction commandés en position et en intensité qui s'opposent au libre déplacement de la pédale. Ces appareils posent des problèmes que l'invention entend solutionner:
- les régulateurs n'agissent pas en limiteurs et ne sont pas utilisables en circulation urbaine: ils ne permettent pas le ralentissement naturel par relâchement de la pédale et sont mis hors service par une action sur le freinage ou le débrayage.
- les alarmes ne participent pas à un automatisme de conduite et n'aident pas à maintenir la vitesse dans une plage étroite.
- les limiteurs ont pour inconvénient de brider le véhicule ou de positionner sur la course de la pédale un point dur que les moyens de contrôle et le mode d'action utilisés rendent désagréable au conducteur et incompatible avec la stabilisation de la vitesse.

L'invention décrite ci après résulte d'une approche différente du problème et cumule les fonctions de ces trois appareils sans en avoir les limitations. Elle agit simultanément et par un même moyen en signalisation, limitation et régulation et est utilisable quelles que soient les conditions de circulation. Elle laisse aussi au conducteur le maximum de libre arbitre et ne modifie pas ses habitudes de conduite, tout en l'assistant très efficacement.
La solution a consisté à réaliser une boucle de régulation, à l'intérieure de laquelle le conducteur est intégré comme un élément actif. Le dispositif est constitué à minima d'un capteur de vitesse, d'un sélecteur de consigne, d'une unité électronique et d'un servomoteur. La vitesse du véhicule, détectée par un capteur, est comparée par l'unité électronique à la consigne de vitesse qui a été sélectionnée. Quand la vitesse devient supérieur à la consigne, l'unité électronique commande le servomoteur, utilisé en asservissement de force, de façon à produire une force de rappel contrôlée sur l'organe de réglage de la puissance directement sous la dépendance du conducteur, par exemple une pédale d'accélérateur. Cette force, transmise par une liaison mécanique, est produite par un ressort associé à un mécanisme de triangulation, dont un moteur déplace les composantes de forces qui agissent sur l'organe de sortie du servomoteur. La force de rappel sur la pédale est ainsi réglée, sans discontinuité, d'une valeur minimale à une valeur maximale, indépendamment de sa position, en fonction du signal de commande que le servomoteur reçoit de l'unité électronique. Ainsi l'invention ne dépossède pas le conducteur du contrôle de son accélérateur:
- la mesure du dépassement de vitesse lui est transmise par une perception directement liée à l'action de conduite; la force de rappel sur la pédale est en rapport direct avec l'écart de vitesse. La surveillance du compteur n'est plus nécessaire.
- les variations d'intensité de cette force sont suffisantes pour aider le conducteur à corriger inconsciemment et sans effort la position de la pédale d'accélérateur.
Le pied du conducteur est ainsi utilisé à la fois comme capteur de vitesse et comme acteur intelligent de la conduite; la maîtrise de la vitesse est transposée au contrôle instinctif d'une force et le conducteur peut (imiter ou stabiliser la vitesse sans effort d'attention. Les solutions techniques retenues lui permettent aussi d'outrepasser à tout moment l'action du dispositif. La limitation du glissement de traction repose sur les mêmes principes, avec pour mesure la vitesse des roues. On peut noter que l'invention n'est pas incompatible avec les autres équipements (injection électronique, boites automatiques, volet de gaz électronique...) et que son installation ne nécessite qu'une adaptation mineure. Elle est par principe même d'une grande sécurité et n'exige du conducteur aucune autre manoeuvre que le choix de la vitesse limite. La simplicité des moyens mis en oeuvre garantit un coût de fabrication très bas et une grande fiabilité.

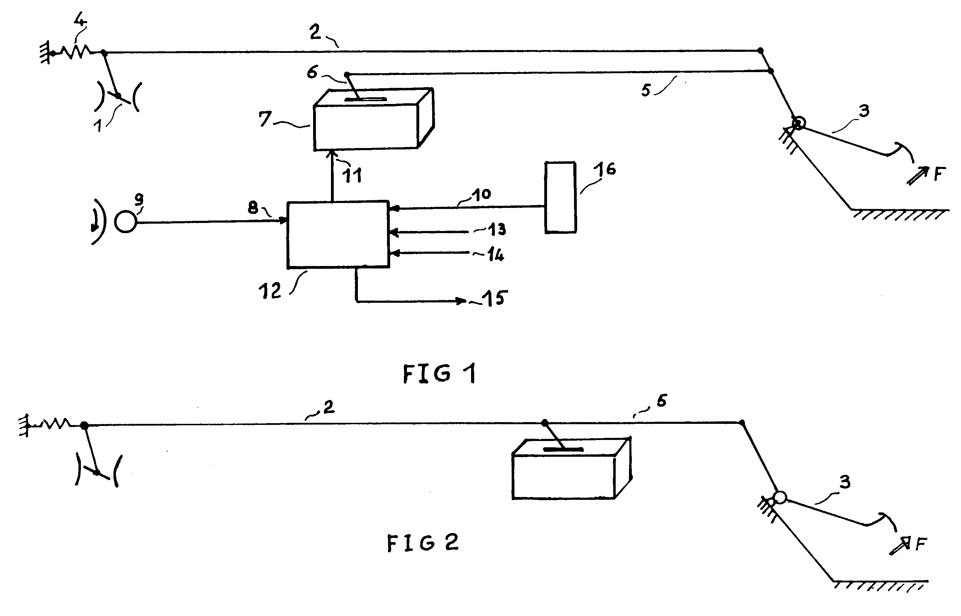

L'explication détaillée du fonctionnement, dans la description qui va suivre, permet d'apprécier la portée et les avantages de ces principes, ainsi que les solutions techniques utilisées.
Les figures annexées représentes :
- figure 1 : synoptique général.
- figure 2 : variante de la liaison.
- figure 3 : principe de fonctionnement du servo moteur
- figure 4 :principe d'une réalisation intégrée à la pédale
- figure 5 : variante avec pédale
- figure 6 : variante de réalisation du servo moteur
- figure 7 : variante de réalisation du servo moteur
- figure 8 : variante de réalisation du servo moteur
- figure 9 : synoptique de l'unité électronique
- figure 10 : détail de l'adaptation à la pédale
- figure 11 : détail de la pédale, variante.
- figure 12 : détail de la pédale, variante.
- figure 13: exemple pratique de réalisation
Dans l'exemple choisi, non limitatif, pour illustrer le fonctionnement de l'invention, l'organe de commande de puissance directement sous la dépendance du conducteur est la pédale d'accélérateur. La commande de puissance est le papillon de gaz d'une automobile. Ce pourrait être tout autant une pompe à injection ou un dispositif de commande électronique, de même que le principe s'appliquerait à n'importe quel autre engin motorisé. On se référera d'abord à la figure 1.

Le papillon de gaz (1) est sollicité par un câble (2) actionné par la pédale (3) à l'encontre de la force du ressort (4). Une liaison mécanique (5) solidaire des mouvements de la pédale sollicite aussi en déplacement l'organe de sortie (6) du servo moteur (7). Comme indiqué Fig2, la liaison mécanique (5) peut aussi être en tout ou partie commune au servo moteur et à la commande de puissance, ici le papillon de gaz.
Une unité électronique de contrôle (12) reçoit la mesure de vitesse (8) d'un capteur (9). Elle reçoit aussi par la ligne (10) la consigne de vitesse limite issue du sélecteur (16). Cette consigne peut être choisie parmi des valeurs prédéterminées ou résulter de la mémorisation de la vitesse instantanée. Elle peut aussi être imposée par un dispositif extérieur : radio guidage, balise de sécurité, système anti-collision. Le signal (11) formé par l'unité électronique assure la commande du servo moteur (7) qui est utilisé en asservissement de force. Quand la vitesse du véhicule dépasse la consigne, ce signal commande le servo moteur de telle façon qu'il produise sur la pédale (3), au moyen de l'organe de sortie (6) et par l'intermédiaire de la liaison (5), une force de rappel contrôlée opposée à celle par laquelle le conducteur agit. L'utilisation du servomoteur en asservissement de force est une des caractéristiques essentielles de cette invention qui la distingue des réalisations antérieures, limiteurs ou régulateurs, dans lesquelles le servomoteur est asservi en position. Ici, le point d'application de la force peut au contraire occuper n'importe quelle position car il est lié à la course de la pédale. De plus, la force de rappel est contrôlée par l'unité électronique de façon à être fonction de l'écart de vitesse. Son intensité et la progressivité de son action sont à tout moment déterminés par l'asservissement, indépendamment des déplacement de la pédale. Le servomoteur peut ajuster cette force sans discontinuité d'une valeur nulle à la valeur limite de la plage de fonctionnement. Il transmet ainsi au conducteur une perception quantifiée de l'écart de vitesse. La force de rappel est suffisamment importante pour déplacer le pied du conducteur, mais elle détermine aussi de sa part un comportement réflexe par lequel il maintient instinctivement le véhicule à la vitesse présélectionnée. La proportionnalité qui existe entre l'écart de vitesse et l'effort assure un fonctionnement stable de la régulation. Le conducteur peut malgré tout agir avec une force supérieure, pour un dépassement volontaire et momentané de la vitesse limite. Cette situation exceptionnelle est signalée par une alarme mise en service quand l'écart de vitesse est maintenu à une valeur excessive. D'autre part, la force de rappel est forcée temporairement à une valeur basse par l'action d'un signal commandé par le débrayage ainsi que lorsque la vitesse d'enfoncement de la pédale d'accélérateur, représentative d'une intention d'accélération, dépasse un seuil prédéterminé. La vitesse de la pédale peut être transmise par un capteur intégré au servomoteur ou issue d'une information extérieure. Ces solutions améliorent l'agrément de conduite et respectent totalement le libre arbitre du conducteur. De même, il peut aussi rouler à une vitesse inférieure, simplement en relevant la pédale d'accélérateur; aucune manoeuvre de mise hors service du système n'est nécessaire. Sitôt que la vitesse du véhicule est inférieure à la consigne, l'unité électronique forme sur la ligne (11) le signal qui règle le servo moteur à une force nulle. L'appareil n'est alors plus perceptible au conducteur. Il est remarquable que l'invention ne limite à aucun moment la puissance du véhicule, donc sa capacité d'accélération et que son usage ne nécessite de la part du conducteur ni attention ni intervention particulière. Ainsi le limiteur régulateur est aussi bien adapté à la circulation urbaine ou routière dense, où il ne modifie pas les habitudes de conduite, qu'aux grands trajets sur autoroute à vitesse stabilisée. Ces caractéristiques distinguent l'invention des limiteurs décrits dans les brevets antérieurs, dans lesquels le mécanisme de contrôle agit comme une butée mobile à l'encontre de la course de la pédale, même s'il est prévu que cette butée est résiliente et peut être dépassée en produisant un effort supérieur. En effet, la butée est réglée en position en fonction de l'écart de vitesse et la dureté qu'elle oppose à la pédale dépend donc des mouvements de celle ci, tant en intensité qu'en progressivité. Les sensations de point dur ne sont donc pas reproductibles, parfois brutales, et sans relation directe avec l'écart de vitesse. Le dispositif GB, A, 2 114 717, ne repousse pas la pédale par une force élastique, mais freine son déplacement et peut même l'immobiliser, ce qui est contraire aux principes de l'invention. L'invention décrite ici remédie totalement à ces inconvénients, du fait que l'intensité de la force et la progressivité de son action sont en toute circonstance contrôlées par l'asservissement. L'action du dispositif, douce, progressive et cohérente avec le comportement du véhicule font que son usage n'est jamais perçu comme contraignant. Une autre caractéristique intéressante, est que par construction la force produite par le servo moteur est unidirectionnelle. Elle ne peut agir que dans le sens du rappel vers une vitesse nulle et en aucun cas dans le sens de l'accélération qui reste strictement sous le contrôle du conducteur, contrairement à la disposition adoptée sur les régulateurs. Le dispositif est donc de façon intrinsèque en sécurité positive et ne nécessite aucun artifice supplémentaire pour pallier à un disfonctionnement. Les lignes (13) et (14) peuvent transmettre à l'unité électronique des signaux de sécurité, par exemple l'alarme "stop" des automobiles ou/et la mesure de surrégime moteur, sans que ces exemples soient limitatifs. Ces signaux agissent de façon prioritaire pour régler la force de rappel au maximum, même lorsque la fonction limiteur/régulateur n'est pas en service, ce qui améliore l'information du conducteur et la sécurité. Le contrôle du glissement de traction se fait selon les mêmes principes: l'unité électronique détecte le glissement en comparant la vitesse de rotation des roues et détermine le signal de correction. Les différents signaux de contrôle de vitesse, glissement, sécurité, sont comparés dans un sélecteur de maximum. Celui qui implique la force de rappel la plus grande détermine le signal par lequel la ligne (11) agit sur la commande du servo moteur, à moins qu'une action de débrayage ou une accélération ne force temporairement le signal de commande à une valeur basse. L'unité électronique peut aussi générer au moins un signal électrique de sortie, en fonction de critères prédéfinis. On peut citer en exemple la limitation absolue de la vitesse maximum d'un poids lourd ou d'un véhicule de transport en commun, en intervenant directement sur l'électronique du système d'injection. De même le contrôle du glissement peut agir sur l'asservissement de freinage ou sur l'allumage du véhicule simultanément au réglage de la force de rappel de la commande de puissance. Ces résultats sont obtenus sans investissement supplémentaire.

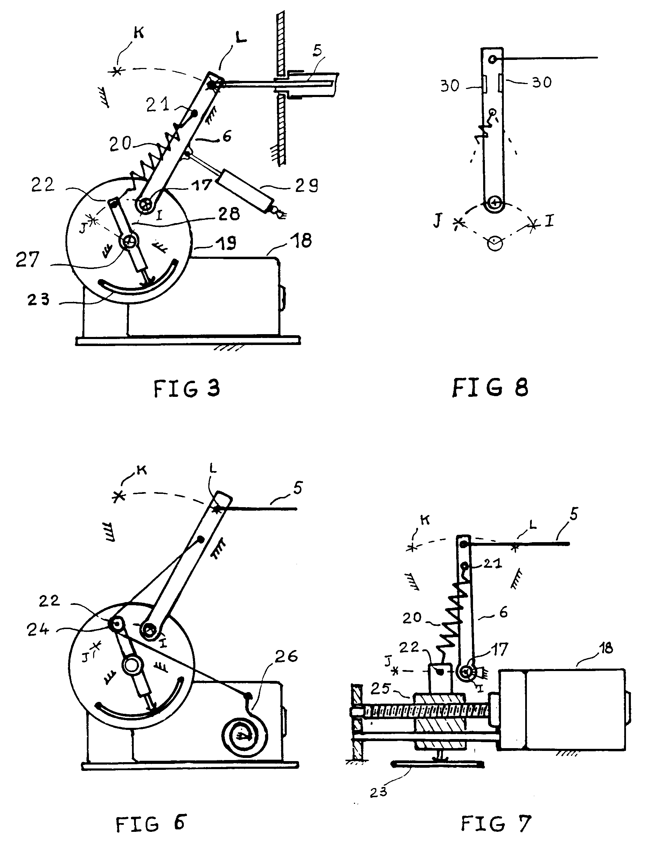

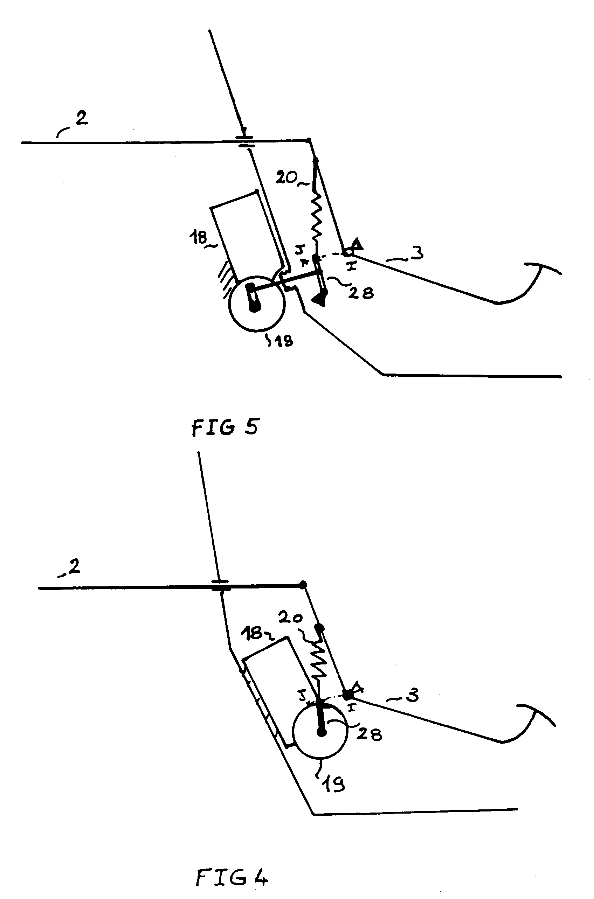

La figure 3 montre une réalisation simplifiée du servo moteur qui permet de comprendre son fonctionnement. Il fonctionne sur le principe d'un contrôle de force en boucle ouverte, obtenu en déplaçant les composantes des forces qu'un ressort exerce sur le levier du mouvement de sortie. Cet effet est lui même le résultat de l'asservissement en bouche fermée de la position d'un des points d'encrage du ressort. Il est constitué d'un moteur électrique (18) associé à un réducteur (19) pour former un moto-réducteur à mouvement mécaniquement non réversible. L'axe de sortie (27) du motoréducteur entraîne en rotation une biellette (28) dont l'extrémité se déplace selon l'arc IJ. Un système de recopie (23), potentiomètre ou codeur binaire par exemple, est solidaire du mouvement de la biellette et transmet à l'unité électronique l'information qui permet l'asservissement en position de cette dernière. La position peut aussi être déterminée en comptant le nombre de révolutions du moteur. L'organe de sortie du servomoteur, chargé de transmettre la force de rappel, est le levier (6). Ce pourrait être aussi bien un secteur circulaire d'enroulement du câble ou tout autre pièce mécanique pivotante propre à transmettre l'effort. Ce levier pivote à une extrémité sur un axe (17) aligné avec le point I et solidaire du corps du servomoteur. Il se déplace sur un plan parallèle à celui de la biellette. L'autre extrémité du levier est connectée à la liaison mécanique avec la pédale d'accélérateur ; cette liaison peut se faire par un câble souple sous gaine. Cette extrémité se déplace selon l'arc KL, correspondant à un déplacement proportionnel de la pédale, K étant la position de repos et L la position de puissance maximum. Un ressort (20) est fixé à deux pivots, par lesquels il est tendu avec une force de traction initiale importante, entre la biellette d'une part, pivot (22), et le levier d'autre part, pivot (21). Quand le pivot (22) est aligné avec l'axe (17), la force de traction du ressort n'exerce aucune composante de rotation sur le levier (6) quelle que soit sa position sur l'arc KL. Il n'y a donc aucune force de rappel sur la pédale. En fait, un léger désalignement du pivot (22), dirigé vers J, permet d'assurer la force de traction juste nécessaire pour maintenir la tension du câble. Ainsi le levier (6) accompagne les mouvements de la pédale sans que le conducteur en ressente les effets. C'est cette position que l'unité électronique impose à la biellette tant que la vitesse est inférieure ou égale à la consigne. Sitôt que la vitesse devient supérieure, le moteur est commandé de façon à ce que la biellette se déplace de I vers J. La force de traction du ressort produit de ce fait une composante de rotation sur le levier (6). L'asservissement en position de la biellette, donc du pivot (22) sur l'arc IJ, fonction de l'écart de vitesse, permet ainsi de contrôler la force de rappel F que subit le conducteur. Nulle en position I, la force est maximum en position J.
Le mécanisme de décomposition de force qui est à la base du fonctionnement du servomoteur peut aussi avantageusement être intégré au pédalier d'accélérateur, comme indiqué figure 4. Dans ce cas le levier (6) est remplacé par un bras de la pédale ou par un élément solidaire de son déplacement, directement soumis à la traction du ressort (20). La biellette (28),qui déplace le pivot (22) sur l'arc IJ peut être portée par le motoréducteur ou articulée sur un axe indépendant et entrainée par le moto réducteur au moyen d'un accouplement mécanique (figure 5) adapté aux contraintes d'effort et d'encombrement.

Dans les mécanismes des fig3 et fig4, le déplacement du levier (6) sur l'arc KL influence légèrement la force de rappel, sans que ce soit perceptible à l'utilisateur. Pour d'autres applications (robotique, télémanipulateurs, commandes assistées...), une meilleure précision dans le réglage de la force et plus d'indépendance vis à vis du déplacement du mouvement de sortie, peuvent être obtenues par différents moyens : modification du mouvement relatif de la biellette et du levier, remplacement du ressort de tension par un ressort spiral multi-tours (26) actionné par un câble, comme représenté en variante (fig 6) et surtout en ajoutant un contrôle en boucle fermée, au moyen d'une mesure directe de la force. Cette mesure, transmise à l'unité électronique, peut se faire par un capteur connu intercalé entre le levier du mouvement de sortie et l'utilisation, ou par des jauges de contraintes (30) solidaires du corps du levier (fig. 8). Ce double contrôle, boucle ouverte / boucle fermée permet un asservissement de force précis et stable. Pour des applications de ce type, une commande bidirectionnelle de la force peut être obtenue en positionnant l'axe (17) entre les positions I et J de la course du pivot (22). Sans sortir du cadre de l'invention, le servomoteur peut être réalisé selon d'autres variantes qui mettent en oeuvre le principe du contrôle de la composition des forces agissant sur l'organe de sortie. La figure 6 montre un mode de réalisation dans lequel la force est transmise de la biellette au levier par un câble, guidé par une poulie tournant libre sur le pivot (22). La position de la poulie par rapport à l'axe (17) du levier détermine l'amplitude de la force de rappel. Cette disposition permet plus de souplesse dans le choix du ressort. Elle permet entre autre l'utilisation d'un ressort spiral multi-tours, dont la variation de dureté reste négligeable vis à vis du mouvement de sortie. La figure 7 schématise un autre mode de réalisation dans lequel le pivot (22) est déplacé en translation par un système vis écrou (25). Pour chacun de ces modes de réalisation, une variante de construction consiste à prévoir un petit amortisseur à simple effet (29) connecté au levier (6) d'une part et à la base mécanique d'autre part, de façon a limiter la vitesse de retour du levier et le choc de la pédale dans le cas où elle serait relachée brutalement. Quelle que soit la variante de réalisation retenue, le servomoteur présente un bon comportement dynamique vis à vis des déplacements du mouvement de sortie. Des mouvements rapides de la pédale d'accélérateur ne produisent pas de variation d'effort perceptibles à l'utilisateur, ce qui contribue à une sensation agréable de grande souplesse. En effet, la force de rappel ne dépend que du ressort et non des réactions d'un servo-mécanisme. D'autre part, à force constante, la dépense énergétique est nulle. L'intensité moyenne requise pour le fonctionnement reste ainsi très modérée.

La figure (9) représente l'architecture schématique de l'unité électronique. Elle est réalisée autour d'un microcontrôleur monochip (49), interfacé selon les prescriptions du fabricant. Il intègre les fonctions d'acquisition, de mémorisation, de calculs d'actions et assure l'asservissement en position de la biellette du servomoteur par l'intermédiaire d'une interface de puissance (40). Selon une variante de réalisation l'interface de puissance peut aussi réaliser la fonction d'asservissement de position, en correspondance avec la consigne déterminée par l'unité électronique et transmise par la ligne (11). La mesure de vitesse est issue d'un capteur (9) magnétique ou optoélectronique qui délivre une fréquence proportionnelle à la vitesse de rotation des roues. Pour la limitation du glissement de traction, il est nécessaire de prévoir un capteur par roue. La consigne de vitesse est sélectionnée au moyen d'un petit clavier (16) lu par le microcontrôleur. Ce peut être une valeur prédéfinie ou la mémorisation de la vitesse instantanée. L'unité électronique lit aussi sur les lignes (13) et (14) des signaux externes au système, consignes de sécurité ou alarmes, et commande, par des lignes de sortie (15) des dispositifs de contrôle du véhicule. Elle reçoit aussi le signal commandé par le débrayage, au moyen d'un contact par exemple, et le signal par lequel le programme détermine la vitesse de déplacement de la pédale. Les différentes consignes de limitation et de sécurité sont stockées dans une mémoire réinscriptible et peuvent être modifiées in situ très simplement si nécessaire, entre autre pour s'accorder aux évolutions de la règlementation, de même qu'elles peuvent être vérrouillées. Schématiquement le microcontrôleur exécute le programme suivant :
- acquisition des grandeurs d'entrées.
- calcul des actions liées aux grandeurs surveillées et aux consignes.
- traitement des alarmes.
- sélection de la plus grande des actions.
- traitement des sigaux de débrayage et accélération
- sortie des signaux de commande et de signalisation.
Le calcul de la régulation de vitesse se fait selon l'algorithme connu sous le nom d'action proportionnelle et dérivée, avec dérivée de la mesure. Les réglages des actions sont choisis selon les règles de l'art pour obtenir une commande adaptée au comportement du véhicule. Ils sont optimisés à tout moment en fonction de la vitesse. Le signal de commande du servomoteur, ligne (11), est formé d'impulsions rectangulaires modulées en rapport cyclique. Ces impulsions commandent l'interface de puissance (40) réalisée par un pont en "H" de transistors de puissance à effet de champ qui délivrent l'énergie nécessaire à la commande du moteur. Le servomoteur émet en retour vers l'unité électronique l'information de position qui est lue par le microcontrôleur pour assurer l'asservissement de position. Le capteur de position (23) peut être de tout modèle connu. On peut citer en exemple un potentiomètre ou un codeur en binaire réfléchi à faible résolution, de même qu'un générateur d'impulsions commandées par la rotation du moteur. Le microcontrôleur gère aussi l'affichage de la consigne sélectionnée et la procédure de maintenance pour la modification des paramètres de réglage.

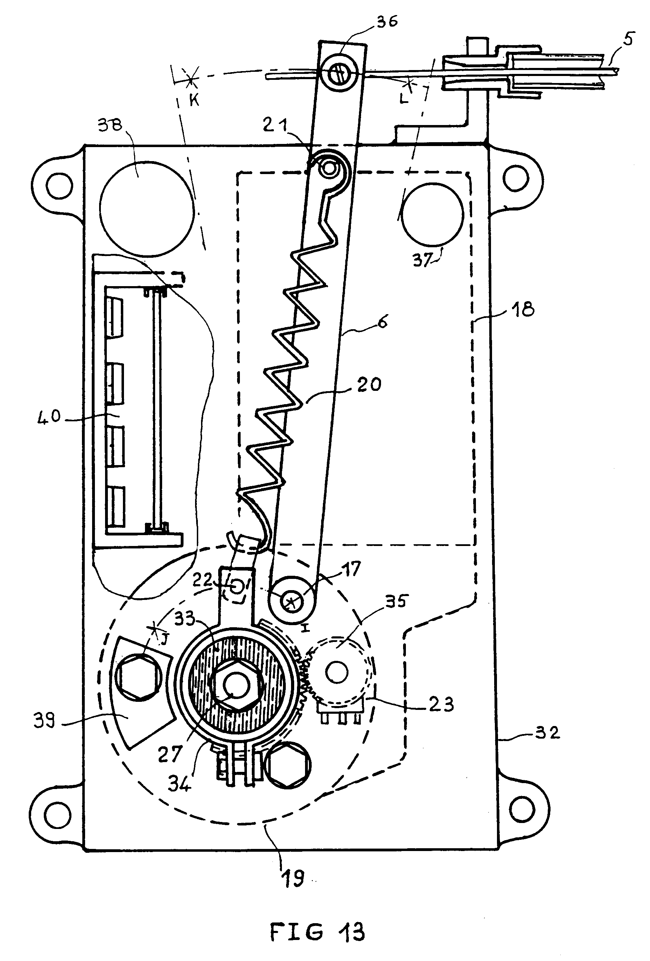

La figure 13 représente un exemple de réalisation pratique du servomoteur. Le moto réducteur réunit en un ensemble monobloc un moteur électrique (18) et un réducteur à vis sans fin (19). Il est fixé dans un boîtier (32) dont la face supérieure sert de platine de montage. Le boîtier est muni de pattes pour son immobilisation dans le véhicule. L'axe de sortie (27) du réducteur est équipé d'un accouplement élastique du type silent-bloc (33), sur la bague extérieure duquel un collier est immobilisé. Ce collier supporte le pivot (22) auquel le ressort (20) est accroché. L'axe (27) entraîne aussi en rotation le potentiomètre de recopie (23) par l'intermédiaire d'un pignon (35). Le levier (6) du mouvement de sortie pivote sur l'axe (17), solidaire de la platine et du corps du servomoteur. Il reçoit la traction du ressort par le pivot (21). A l'extrémité du levier, une pièce d'accouplement (36) libre en rotation immobilise l'extrémité du câble de rappel (5), guidé lui même par une gaine souple. Les déplacements du levier sont limités par deux butées (37) (38) et le levier peut agir sur le capteur de déplacement de la pédale, non représenté sur la figure. Des fins de course, invisibles sur le dessin, et une butée de sécurité (39) limitent la course du pivot (22) en cas de défaillance de l'asservissement. L'interface de puissance (40) trouve place dans le boîtier. L'ensemble du mécanisme est protégé par un couvercle dont le levier (6) dépasse par un joint cache poussière.

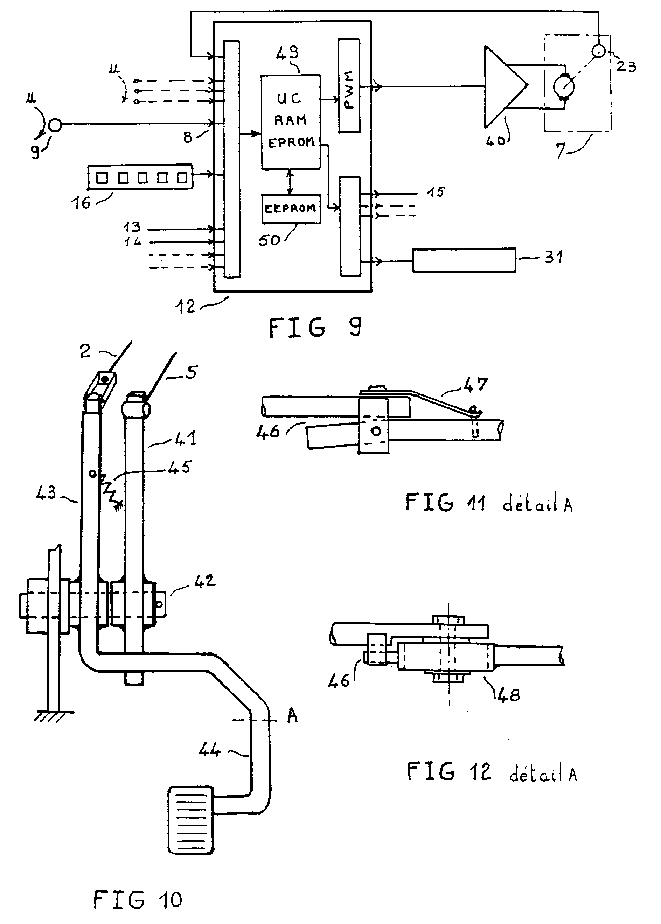

La fig 10 montre un mode réalisation possible de la commande de rappel de la pédale. Le câble (5) issu du servomoteur actionne un levier intermédiaire (41) monté libre sur l'axe (42). Une extrémité de ce levier, paralléle au bras (43) de la pédale lié au volet de gaz, reçoit le tête de câble, l'autre extrémité exerce la force sous la manivelle que forme la pédale. Pédale et levier sont indépendants, si bien que l'action du levier ne peut que remonter la pédale vers la position de puissance nulle du moteur. Elle ne peut ni augmenter la puissance, ni s'opposer à la remontée naturelle de la pédale sous l'action du ressort de rappel (45).
Tout autre moyen de liason mécanique qui ne peut agir que dans le sens de la traction convient aussi: câble souple, biellette articulée...Le mode de réalisation (fig.4) qui consiste à intégrer le servomoteur au mécanisme de la pédale répond parfaitement à cette condition.
Les figures 11 et 12 représentent une variante de réalisation dans laquelle le bras (44) qui transmet l'effort au pied du conducteur est muni d'une liaison élastique à débattement limité, constituée (fig.11) d'une articulation et d'un ressort (47), ou (fig.12) d'un silent-bloc (48), ou de tout autre disposition équivalente telle une semelle de pédale résiliente.La raideur de la liaison élastique est choisie très supérieure à l'effort résistant des ressorts (4) et (45) qui rappelent la pédale, si bien qu'elle ne fléchit pas en utilisation normale. Lorsque le limiteur entre en action avec une force suffisante, fraction de la force maximum, la flexion de la liaison élastique permet le déplacement du bras de la pédale (44) même si le pied n'a pas bougé. Ce débattement est limité à une fraction de la course maximale par une butée (46 ). La force de contre réaction qu'exerce le servomoteur sur le pied du conducteur n'est pas amoindrie mais l'action du régulateur sur le contrôle de la puissance du moteur est plus efficace. Cette disposition laisse toujours au conducteur la capacité d'outrepasser la limitation, au prix d'une course de pédale légèrement augmentée.

## Revendications

1. Dispositif d'assistance au contrôle de la puissance des moteurs, particulièrement de véhicules automobiles, constitué d'au moins un capteur de vitesse (9), d'un sélecteur de consigne (16), d'une unité électronique (12), d'un servomoteur (7), caractérisé en ce que le servomoteur est utilisé en asservissement de force, pour produire une force de rappel (F) contrôlée sur l'organe de réglage de la puissance directement sous la dépendance du conducteur, par exemple une pédale (3), au moyen d'une liaison mécanique.

2. Dispositif d'assistance selon la revendication 1, caractérisé en ce que le servomoteur (7) peut règler la force de rappel (F) sans discontinuité, d'une valeur minimale à une valeur maximale, par déplacement des composantes des forces qui s'exercent sur l'organe de sortie (6), en fonction d'un signal de commande (11) qu'il reçoit de l'unité électronique.

3. Dispositif d'assistance selon l'une quelconque des revendications 1 ou 2, caractérisé en ce que la force de rappel (F) produite par le levier du mouvement de sortie (6) du servomoteur (7), est une composante de la force de traction d'un ressort (20), tendu entre un pivot (21), solidaire du levier (6) et un pivot mobile (22), ce pivot étant déplacé par un moteur ou un moto-réducteur à mouvement mécaniquement non réversible, en fonction du signal de commande (11), d'un point I aligné avec l'axe (17) du levier (6), vers un point J, de façon à ce que la force réglée soit unidirectionnelle et opposée à celle par laquelle le conducteur agit quand il augmente la puissance du moteur du véhicule.

4. Dispositif d'assistance selon l'une quelconque des revendications précédentes, caractérisé en ce que le mécanisme de décomposition de forces du servomoteur peut être intégré au pédalier de l'accélérateur, le levier (6) étant remplacé par un bras de la pédale sur lequel le ressort (20) agit directement en fonction du déplacement de la biellette (28) qui porte le pivot (22), la biellette pouvant soit être solidaire du motoréducteur, soit articulée sur un axe indépendant et entrainée par le motoréducteur au moyen d'une liaison mécanique.

5. Dispositif d'assistance selon l'une quelconque des revendications 1,2,3, caractérisé en ce que: la liaison mécanique (5) peut être commune entiérement ou en partie au servo moteur et à la commande de puissance, un amortisseur à simple effet peut être connecté à l'organe de sortie (6) et à la base de montage du mécanisme, des fins de course et une butée limitent la course du pivot (22), des butées (37) (38) limitent la course de l'organe de sortie.

6. Dispositif d'assistance selon l'une quelconque des revendications précédentes, caractérisé en ce que le pivot (22) peut être positionné par l'unité électronique en fonction d'une consigne de force calculée et de l'information de position du pivot issue du capteur (23) ou de la position déterminée par comptage des révolutions du moteur et/ou par la mesure directe de la force produite, au moyen d'un transducteur de force connu ou de jauges de contraintes (30) solidaires du levier et en ce que l'axe (17) peut être contenu entre les positions I et J de la course du pivot (22) pour produire si nécessaire une force bidirectionnelle. .

7. Dispositif d'assistance selon l'une quelconque des revendications 1 et 2, caractérisé en ce que l'unité électronique est réalisée sur la base d'un microcontrôleur monochip (49) dont le programme détermine un signal (11) qui commande le servomoteur par l'intermédiaire d'une interface de puissance (40), en fonction de signaux d'entrées et de paramètres de consignes stockés dans une mémoire réinscriptible et/ou issus d'un clavier de sélection et/ou issus d'informations extérieures.

8. Dispositif d'assistance selon l'une quelconque des revendications 1,2,7 caractérisé en ce que la consigne de force qui détermine le réglage du servomoteur est le plus grand des signaux de contrôle calculés par le programme, entre le signal de limitation/régulation formé à partir de l'écart entre la mesure de vitesse et la consigne de vitesse selon le mode d'action dit proportionnel et dérivé, et les signaux de contrôle déterminés par d'autres informations tels le régime moteur, des consignes extérieures, des informations de sécurité, et en ce que la consigne de force peut aussi être forcée temporairement à une valeur basse par l'action d'un signal commandé par le débrayage ou lorsque la vitesse de déplacement de la pédale d'accélérateur dépasse un seuil prédéterminé, cette vitesse étant transmise par un capteur intégré au servomoteur ou issue d'une information extérieure.

9. Dispositif d'assistance selon l'une quelconque des revendications 1,2,7, caractérisé en ce que l'unité électronique peut commander un affichage d'informations et qu'elle peut former un signal d'alarme quand l'écart de vitesse est maintenu à une valeur excessive.

10. Dispositif d'assistance selon l'une quelconque des revendications 1,2,3,4, caractérisé en ce que le servomoteur peut agir sur la pédale soit directement par un câble (5) connecté librement au bras (43) de façon à ne pouvoir être actif que dans le sens de la traction , soit en actionnant par le câble (5) un levier intermédiaire (41) qui ne peut agir sur la pédale que dans le sens de la réduction de puissance du moteur et sans que, dans chacun des cas, la pédale puisse être retenue dans son mouvement de rappel naturel par les ressorts (4) et (45), et en ce que, selon une variante de réalisation il peut exister une liaison élastique à débattement limité entre le point d'application de la force et la surface d'appui sur la pédale du pied du conducteur, cette liaison pouvant être une surface de pédale résiliente.

## Claims

1. Device for assisting the control of engine output, particularly of motor vehicles, comprised of at least one speed sensor (9), of a selector of an instruction (16), of an electronic unit (12) and of a servomotor (7), characterised in that the servomotor is used in automatic control of force in order to produce a controlled return force (F) on the output adjustment element in direct dependence on the driver, for example, a pedal (3), by means of a mechanical link.

2. Assistance device according to claim 1, characterised in that the servomotor (7) can adjust the return force (F) continuously, from a minimum value to a maximum value by displacing the components of the forces which are exerted on the output element (6) according to a control signal (11) which it receives from the electronic unit.

3. Assistance device according to either of claims 1 or 2, characterised in that the return force (F) produced by the output movement lever (6) of the servomotor (7) is a component of the traction force of a spring (20) held between a pivot (21) firmly fixed to the lever (6) and a movable pivot (22), this pivot being displaced by a motor or geared motor with non reversible mechanical movement, according to the control signal (11), from a point I aligned with the axis (17) of the lever (6) to a point J so that the adjusted force is unidirectional and opposed to that by which the driver acts when he increases the output of the engine of the vehicle.

4. Assistance device according to any of the preceding claims, characterised in that the mechanism for breaking down forces of the servomotor can be integrated into the accelerator pedal, the lever (6) being replaced by an arm of the pedal on which the spring (20) acts directly according to the displacement of the rocker bar (28) which carries the pivot (22), the rocker bar being able either to be connected firmly to the geared motor or articulated on an independent axis and driven by the geared motor by means of a mechanical link.

5. Assistance device according to any of claims 1, 2, 3, characterised in that the mechanical link (5) can be entirely common or associated partly with the servomotor and partly with the output control, a single action damping device can be connected to the output device (6) and to the mounting base of the mechanism, limits of travel and a stop limit the course of the pivot (22), stops (37) (38) limit the course of the output element.

6. Assistance device according to any of the preceding claims, characterised in that the pivot (22) can be positioned by the electronic unit according to a calculated force instruction and to the position datum of the pivot issuing from the sensor (23) or the position determined by counting the revolutions of the engine and/or by directly measuring the force produced by means of a known force transducer or strain gauges (30) firmly fixed to the lever, and in that the axis (17) can be contained between the positions I and J of the course of the pivot (22) in order to produce, if necessary, a bidirectional force.

7. Assistance device according to either of claims 1 and 2, characterised in that the electronic unit is produced on the basis of a monochip microcontroller (49) of which the programme determines a signal (11) which controls the servomotor by means of an output interface (40) according to input signals and parameters of instructions stored in a rewritable memory and/or from a selection keypad and/or from external data.

8. Assistance device according to any of claims 1, 2, 7 characterised in that in that the force instruction which determines the adjustment of the servomotor is the largest of the control signals calculated by the programme between the limitation/adjustment signal formed from the divergence between the speed measurement and the speed instruction according to the mode of action known as proportional and derived, and the control signals determined by other data such as the engine speed, external instructions and safety data, and in that the force instruction can also be temporarily forced to a low value by the action of a signal controlled by declutching or when the speed of the displacement of the accelerator pedal exceeds a predetermined threshold, this speed being transmitted by a sensor integrated in the servomotor or issuing from an external datum.

9. Assistance device according to any of claims 1, 2, 7, characterised in that the electronic unit can control a display of data and that it can produce an alarm signal when the speed divergence is kept at an excessive value.

10. Assistance device according to any of claims 1, 2, 3, 4, characterised in that the servomotor can act on the pedal either directly by means of a cable (5) freely connected to the arm (43) so as to be able to be active only in the direction of the traction, or by actuating, by means of the cable (5), an intermediate lever (41) which can act on the pedal only in the direction of the reduction of output of the engine and without, in each case, the pedal being able to be held in its natural return movement by the springs (4) and (45) and in that according to a different embodiment an elastic link with limited clearance can be provided between the point of application of the force and the abutment surface on the driver's foot pedal, this link being able to be a resilient pedal surface.

## Patentansprüche

1. Servovorrichtung für die Steuerung der Leistung von Motoren, insbesondere von Kraftfahrzeugen, bestehend aus mindestens einem Geschwindigkeitsfühler (9), einem Sollwertwähler (16), einer elektronischen Einheit (12) und einem Servomotor (7),
dadurch gekennzeichnet,
daß der Servomotor zur Kraftregelung verwendet wird, um auf das durch den Fahrer direkt betätigte Organ zur Leistungsregelung, beispielsweise ein Pedal (3), über eine mechanische Verbindung eine gesteuerte Rückholkraft (F) auszuüben.

2. Servovorrichtung nach Anspruch 1,
dadurch gekennzeichnet,
daß der Servomotor (7) die Rückholkraft (F) durch VerLagerung der Komponenten der auf das Ausgangsorgan (6) ausgeübten Kräfte in Abhängigkeit von einem Steuersignal (11), das er von der elektronischen Einheit erhält, ohne Diskontinuität von einem minimalen Wert bis zu einem maximalen Wert regeln kann.

3. Servovorrichtung nach einem der Ansprüche 1 oder 2,
dadurch gekennzeichnet,
daß die durch den Hebel (6) der Ausgangsbewegung des Servomotors (7) erzeugte Rückholkraft (F) eine Komponente der Zugkraft einer Feder (20) ist, die zwischen einem mit dem Hebel (6) fest verbundenen Drehzapfen (21) und einem beweglichen Drehzapfen (22) gespannt ist, der durch einen Motor oder einen Getriebemotor mit nicht reversibler mechanischer Bewegung in Abhängigkeit vom Steuersignal (11) von einem mit der Achse (17) des Hebels (6) fluchtenden Punkt (I) auf einen Punkt (J) zu verlagert wird, so daß die geregelte Kraft nur in einer Richtung wirkt und zu der Kraft entgegengesetzt ist, mit der der Fahrer einwirkt, wenn er die Leistung des Fahrzeugmotors erhöht.

4. Servovorrichtung nach einem der vorhergehenden Ansprüche,
dadurch gekennzeichnet,
daß der Mechanismus zur Zerlegung der Kräfte des Servomotors in die Pedaleinheit des Beschleunigungsorgans integriert sein kann, wobei der Hebel (6) durch einen Arm des Pedals ersetzt ist, auf den die Feder (20) direkt in Abhängigkeit von der Bewegung des Schwingarms (28) einwirkt, der den Drehzapfen (22) trägt, wobei der Schwingarm entweder mit dem Getriebemotor fest verbunden sein kann oder an einer unabhängigen Achse angelenkt und durch den Getriebemotor über eine mechanische Verbindung angetrieben sein kann.

5. Servovorrichtung nach einem der Ansprüche 1, 2, 3,
dadurch gekennzeichnet,
daß die mechanische Verbindung (5) ganz oder teilweise dem Servomotor und der Leistungssteuerung gemeinsam sein kann, daß ein einfachwirkender Dämpfer mit dem Ausgangsorgan (6) und der mechanischen Basis des Mechanismus verbunden sein kann, Endschalter und ein Anschlag den Hub des Drehzapfens (22) begrenzen und Anschläge (37, 38) den Hub des Ausgangsorgans begrenzen.

6. Servovorrichtung nach einem der vorhergehenden Ansprüche,
dadurch gekennzeichnet,
daß der Drehzapfen (22) durch die elektronische Einheit in Abhängigkeit von einem errechneten Kraftsollwert und von der vom Fühler (23) kommenden Information der Position des Drehzapfens oder von der Position positioniert werden kann, die durch Zählung der Umdrehungen des Motors und/oder durch die direkte Messung der erzeugten Kraft mit Hilfe eines bekannten Kraftwandlers oder von mit dem Hebel fest verbundenen Dehungsmeßstreifen (30) bestimmt wird, und daß die Achse (17) zwischen den Positionen I und J des Hubs des Zapfens (22) liegen kann, um erforderlichenfalls eine in zwei Richtungen wirkende Kraft zu erzeugen.

7. Servovorrichtung nach einem der Ansprüche 1 und 2,
dadurch gekennzeichnet,
daß die elektronische Einheit auf der Basis eines Monochip-Mikrosteuerorgans (49) ausgeführt ist, dessen Programm ein Signal (11) bestimmt, das den Servomotor über eine Leistungsschnittstelle (40) in Abhängigkeit von Eingangssignalen und Sollwertparametern steuert, die in einem erneut beschreibbaren Speicher gespeichert sind und/oder von einer Wähltastatur und/oder von äußeren Informationen kommen.

8. Servovorrichtung nach einem Ansprüche 1, 2, 7,
dadurch gekennzeichnet,
daß der Kraftsollwert, der die Einstellung des Servomotors bestimmt, der größte der durch das Programm errechneten Steuersignale unter dem Begrenzungs/Regelsignal, das ausgehend von der Differenz zwischen der Geschwindigkeitsmessung und dem Geschwindigkeitssollwert nach der sogenannten Proportional-Differential-Methode gebildet wird, und den durch andere Daten, wie z.B. Motordrehzahl, äußere Sollwerte, Sicherheitsdaten, bestimmten Steuersignalen ist und daß der Kraftsollwert außerdem durch die Einwirkung eines durch das Auskuppeln erzeugten Signals oder wenn die Geschwindigkeit der Gaspedalbewegung eine vorbestimmte Schwelle überschreitet, zeitweise auf einen niedrigen Wert gezwungen werden kann, wobei diese Geschwindigkeit von einem in den Servomotor integrierten Fühler übertragen wird oder von einer externen Information stammt.

9. Servovorrichtung nach einem der Ansprüche 1, 2, 7,
dadurch gekennzeichnet,
daß die elektronische Einheit eine Informationsanzeige steuern kann und daß sie ein Warnsignal erzeugen kann, wenn die Geschwindigkeitsabweichung auf einem übermäßig hohen Wert gehalten wird.

10. Servovorrichtung nach einem der Ansprüche 1, 2, 3, 4,
dadurch gekennzeichnet,
daß der Servomotor entweder direkt auf das Pedal durch ein Seil (5) einwirken kann, das mit dem Arm (43) frei verbunden ist, so daß er nur in der Richtung des Zugs aktiv werden kann, oder indem er über das Seil (5) einen Zwischenhebel (41) betätigt, der auf das Pedal nur in der Richtung der Verringerung der Motorleistung einwirken kann, und ohne daß das Pedal in jedem der Fälle in seiner selbständigen Rückholbewegung durch die Federn (4) und (45) zurückgehalten werden kann, und daß gemäß einer abgewandelten Ausführungsform eine elastische Verbindung mit begrenztem Ausschlag zwischen dem Angriffspunkt der Kraft und der Fläche des Pedals, auf der der Fuß des Fahrers aufliegt, bestehen kann, wobei diese Verbindung eine federnde Pedalfläche sein kann.
